# EUROPEAN PATENT SPECIFICATION

(11) **EP 2 400 580 B1**
(45) Date of publication and mention of the grant of the patent: **20.02.2013**
(21) Application number: 10196689.3
(22) Date of filing: 23.12.2010
(51) Int. Cl.: H01M 2/14, H01M 10/50, H01M 2/10

(54) **Battery module and cooling thereof**
Batteriemodul und Kühlung des Batteriemoduls
Module de batterie et refroidissement de module de batterie

(30) Priority: 24.06.2010 KR 20100060117
(43) Date of publication of application: 28.12.2011
(73) Proprietor: SB LiMotive Co., Ltd., Giheung-gu Yongin-si, Gyeonggi-do 446-711 (KR)
(72) Inventor: Yajima, Seijiro, Gyeonggi-do (KR); Kim, Tae-Yong, Gyeonggi-do (KR); Sohn, Kwon, Gyeonggi-do (KR)
(74) Representative: Gulde Hengelhaupt Ziebig & Schneider

(56) References cited:
- EP-A1- 1 746 679
- JP-A- 2003 317 812
- US-A1- 2005 058 892
- US-A1- 2006 028 183
- US-A1- 2006 049 799

## Description

### BACKGROUND OF THE INVENTION

### 1. Field of the Invention

The present invention relates to a battery module.

### 2. Description of the Related Art

Rechargeable batteries can be repeatedly charged and discharged unlike primary batteries which cannot be repeatedly charged. Low-capacity rechargeable batteries are used for portable compact electronic apparatuses such as mobile phones, notebook computers and camcorders and high-capacity rechargeable batteries are widely used as a power source for driving a motor of a hybrid vehicle, etc.

Recently, a high-output rechargeable battery using a non-aqueous electrolyte having high energy density has been developed. The high-output rechargeable battery is configured with a high-output rechargeable battery module by connecting a plurality of rechargeable batteries in series so as to be used for driving an apparatus requiring a large power, e.g., motor of an electrical vehicle, etc.

The battery module includes several rechargeable batteries. Therefore, heat generated from each of the rechargeable batteries should be easily emitted. When heat is not normally emitted, the internal temperature of the rechargeable battery increases and as a result, adverse reactions occur, thereby shortening the life-span of the rechargeable battery. Further, when the temperature of the rechargeable battery is continuously increased, the rechargeable battery may catch fire or explode.

Conventionally, a scheme of blowing and supplying outdoor air is adopted in order to cool the battery module, but when the outdoor air is blown and supplied, foreign materials such as dust and the like may be introduced into the battery module, thereby potentially damaging the battery module due to a short-circuit, and the like.
U.S. patent application 2006/0049799 A1 discloses a battery module comprising a plurality of batteries stacked together to form two battery arrays and a cooling passage between the first battery array and the second battery array wherein a cooling medium may flow. The battery module further includes a spacer comprising a plurality of protrusions on each of the batteries for spacing the batteries from each other, wherein a number of protrusions on a first battery of the batteries is different from a number of protrusions on a second battery adjacent to the first battery with respect to a flow direction of the cooling medium.
Furthermore, U.S. patent application 2006/0028183 A1 deals with a battery device comprising a plurality of batteries stacked together to form a plurality of battery modules, wherein the battery device comprises an outer case made of metal and a holder case made of plastic material and wherein a cooling medium can move between the cooling space within the inflow duct and the moving space between the holder case and the outer case.

The above information disclosed in this Background section is only for enhancement of understanding of the background of the invention and therefore it may contain information that does not form the prior art that is already known in this country to a person of ordinary skill in the art.

### SUMMARY

The present invention has been made in an effort to provide a battery module having a stable cooling function.

An exemplary embodiment of the present invention provides a battery module that comprises: a plurality of batteries stacked together along a first direction to form a plurality of battery arrays, wherein a first group of the battery arrays are aligned together along a second direction perpendicular to the first direction and a second group of the battery arrays are aligned together along the second direction, and wherein the first group and the second group are spaced from each other to create a cooling medium flow path therebetween, the cooling medium flow path having a first end and a second end, wherein a cooling medium has a flow direction parallel to the second direction and going from the first end toward the second end; a housing accommodating the batteries; and a plurality of protrusions on each of the batteries and spacing the batteries from each other along the first direction, wherein a number of protrusions on a first battery of the batteries is different from a number of protrusions on a second battery adjacent to the first battery with respect to a flow direction of the cooling medium flow path.

The first battery may be located closer to the first end of the cooling medium flow path than the second battery and the number of protrusions on the first battery may be greater than the number of protrusions on the second battery.

The protrusions may be spaced from each other on an outer surface of each of the batteries. A width of a first protrusion of the protrusions located on the first battery may be greater than a width of a second protrusion of the protrusions located on the second battery.

A length of a first protrusion of the protrusions located on the first battery may be less than a length of a second protrusion of the protrusions located on the second battery. The protrusions may comprise guide protrusions that are elongate and extend generally in a direction from the first end to the second end of the cooling medium flow path.

The housing may be sealed so that the cooling medium for cooling the batteries by convection can be recycled. In an operating orientation, the first battery may be located beneath the second battery.

A cooling medium in the cooling medium flow path may be heated by the batteries to move upwards from the first end to the second end of the cooling medium flow path. The first group of battery arrays may extend along a first side of the cooling medium flow path and the second group of battery arrays may extend along a second side of the cooling medium flow path substantially parallel to the first group.

The battery module may further comprise a partitioning member. The first group and the second group of battery arrays may be within the partitioning member. A cooling space may be defined within the partitioning member and a moving space may be defined outside of the partitioning member. A cooling medium can move between the cooling space and the moving space. The partitioning member may comprise a thermal insulating material.

The battery module may further comprise a guide member formed on the partitioning member. The guide member may extend obliquely from the partitioning member into the moving space. The battery module may further comprise a bottom plate configured to be exposed to exterior air.

The battery module may further comprise a cooling member connected to the housing. The cooling member may be located at generally one end of the housing.

The cooling member may be located at an edge of the housing. The cooling member may have an opening and a heat insulating member may be in the opening and contact the housing.

The protrusions may be fixed to a case of the battery. The protrusions may be fixed to a plate located between the batteries.

The protrusions may comprise guide protrusions that are elongate and extend in a flow direction of the cooling medium flow path and dot protrusions having a greater width and a shorter length than the guide protrusions.

The dot protrusions may be closer to a first end of the flow path channel than the guide protrusions.

Another exemplary embodiment of the present invention provides a battery module that comprises: a plurality of batteries stacked together to form a plurality of battery arrays, wherein a first group of the battery arrays are aligned together and a second group of the battery arrays are aligned together and the first group and the second group are spaced from each other to create a cooling medium flow path therebetween, the cooling medium flow path having a first end and a second end; and a housing accommodating the batteries, wherein a first battery of the batteries located closer to the first end than a second battery of the batteries provides more flow resistance to cooling medium flow in the cooling medium flow path than the second battery.

According to the exemplary embodiments of the present invention, the cooling medium is further well circulated in the housing to thereby improve cooling efficiency, since the speed of the cooling medium is further increased while the cooling medium cools heat of a plurality of batteries. Further, buoyancy increases and the speed of the cooling medium is further increased, since the cooling medium is further heated as the speed of the cooling medium increases.

In particular, the housing can be formed in a sealing type and the rechargeable batteries can be cooled by a convection method, since the cooling medium is normally circulated.

### BRIEF DESCRIPTION OF THE DRAWINGS

FIG. 1 is a cross-sectional view of a battery module according to a first exemplary embodiment of the present invention;

FIG. 2 is a perspective view of battery arrays according to a first exemplary embodiment of the present invention;

FIG. 3 is a perspective view of rechargeable batteries according to a first exemplary embodiment of the present invention;

FIG. 4 is a cross-sectional view of a battery module according to a second exemplary embodiment of the present invention;

FIG. 5 is a cross-sectional view of a battery module according to a third exemplary embodiment of the present invention;

FIG. 6 is a cross-sectional view of a battery module according to a fourth exemplary embodiment of the present invention;

FIG. 7 is an exploded perspective view of rechargeable batteries constituting a battery module according to a fifth exemplary embodiment of the present invention; and

FIG. 8 is a cross-sectional view of a battery module according to a sixth exemplary embodiment of the present invention.

### DETAILED DESCRIPTION

The present invention will be described more fully hereinafter with reference to the accompanying drawings, in which exemplary embodiments of the invention are shown. As those skilled in the art would realize, the described embodiments may be modified in various different ways, all without departing from the scope of the present invention. In addition, like reference numerals denote like elements in the specification and the accompanying drawings.

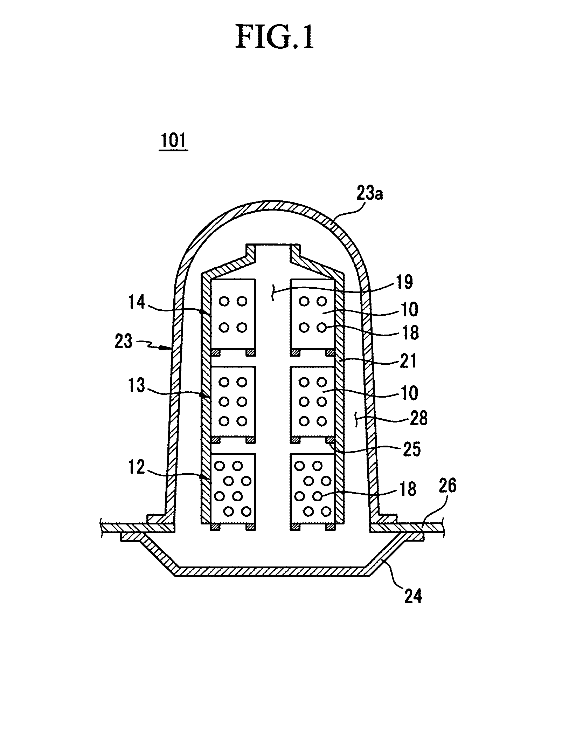

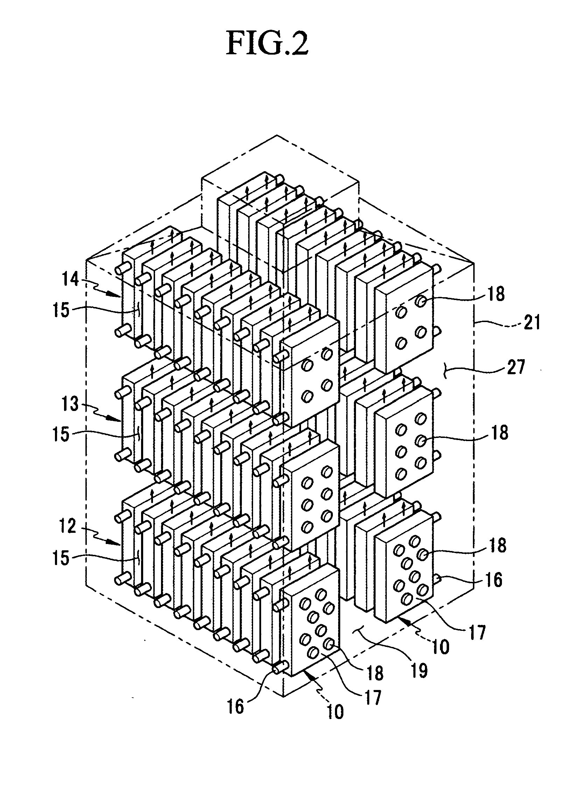

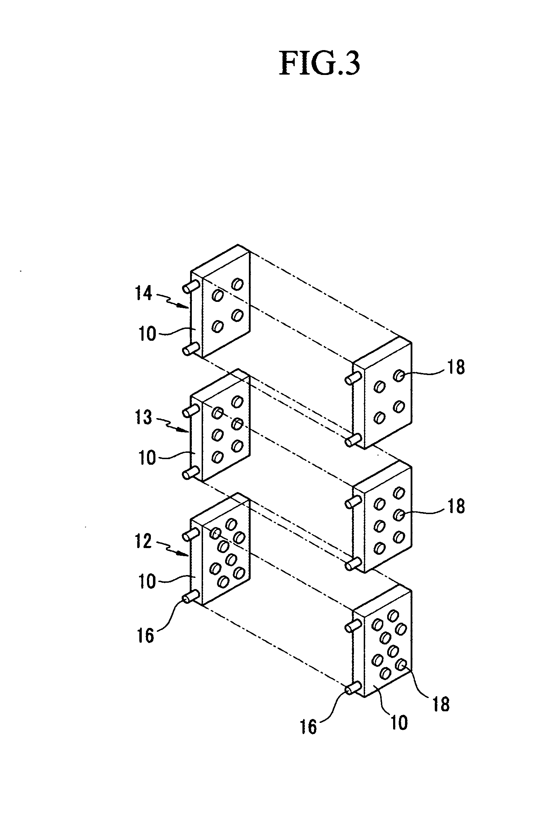

FIG. 1 is a cross-sectional view of a battery module according to a first exemplary embodiment of the present invention, FIG. 2 is a perspective view of battery arrays according to a first exemplary embodiment of the present invention, and FIG. 3 is an exploded perspective view of rechargeable batteries and protrusions according to a first exemplary embodiment of the present invention.

Referring to FIGS. 1 to 3, the battery module 101 according to the first exemplary embodiment of the present invention includes a plurality of rechargeable batteries (e.g., batteries) 10, a housing 23 having space accommodating the rechargeable batteries 10 therein, and a protrusion 18 located between the rechargeable batteries 10 and forming a space wherein a cooling medium moves.

The rechargeable batteries 10 may be lithium ion rechargeable batteries and may have a prismatic shape such as a substantially rectangular parallelepiped shape. However, embodiments of the present invention is not limited thereto, but rather may be applied to various types of batteries such as a lithium polymer battery or a cylindrical battery.

The rechargeable batteries 10 are stacked and arranged in parallel to form battery arrays 12, 13, and 14 and a plurality of battery arrays are accommodated in the housing 23. The battery arrays 12, 13, and 14 are stacked and arranged in parallel to a flow direction of the cooling medium and are arranged in two lines or two groups to form a center passage 19 therebetween and extending along the flow direction of the cooling medium.

The battery arrays 12, 13, and 14 are spaced from each other in a direction crossing the flow direction of the cooling medium with the center passage 19 located therebetween, thus the cooling medium can move through the center passage 19 and the battery arrays 12, 13, and 14.

In the exemplary embodiment, three battery arrays 12, 13, and 14 are stacked and arranged in the flow direction of the cooling medium, but the present invention is not limited thereto and could include two or more battery arrays stacked and arranged.

The protrusion 18 is located between the rechargeable batteries 10 to allow the rechargeable batteries 10 to be spaced from each other. As a result, a passage 15 through which the cooling medium moves is formed between the rechargeable batteries 10.

The protrusion 18 according to the exemplary embodiment may be a dot protrusion which has a circular cross section, but the present invention is not limited thereto and the dot protrusion may be formed in various cross-sectional shapes such as a triangular shape, a quadrangular shape, and the like. The dot protrusion 18 is fixed to a case 17 forming an external surface of the rechargeable battery 10. The dot protrusion 18 may be formed integrally with the case 17 of the rechargeable battery 10 to protrude from the case 17or may be fixed to the case 17 by an adhesive, or the like.

The housing 23 has a hexahedral shape and has a structure in which a cross sectional area increases in one direction (downward as shown in FIG. 1). Further, the top 23a of the housing 23 is formed to have an arc-shaped cross section. As a result, the cooling medium which ascends is guided by the top 23a of the housing 23 to easily move to an edge.

Meanwhile, a partitioning member 21 is installed in the housing 23 to provide a partitioning space through which the cooling medium moves. The partitioning member 21 is made of a thermal insulating material and has a substantially hexahedral shape. Further, the partitioning member 21 defines a cooling space 27 adjacent to the battery arrays 12, 13, and 14 to allow a cooling medium to pass through the battery arrays 12, 13, and 14 and through a moving space 28 outside of the partitioning member 21, thus allowing the cooling medium to be circulated and reintroduced into the cooling space 27.

A first end and a second end of the partitioning member 21 are open to allow the cooling medium to be introduced into the partitioning member 21 and discharged therefrom. Further, the partitioning member 21 is spaced from the housing 23 and the moving space 28 is formed between the partitioning member 21 and the housing 23. The moving space 28 has a structure in which a cross section gradually increases along the flow direction of the cooling medium. As a result, when a cooling medium such as air discharged from the cooling space 27 moves through the moving space 28, the velocity of the air slows. Also, the cooling medium is in contact with the housing 23 for an increased amount of time to thereby cool the cooling medium more quickly.

Further, a bottom plate 24 which is in contact with external air is installed below the housing 23. When the battery module 101 is installed, for example, in an electric car or in a hybrid car, the battery module 101 may be located in a rear trunk and the bottom plate 24 protrudes from the bottom of the vehicle to the outside to be installed in contact with the outdoor air. As a result, the bottom plate 24 is cooled by the outdoor air and the cooling medium discharged from the cooling space 27 may be cooled through the housing 23 and the bottom plate 24. The housing 23 and the bottom plate 24 may be made of aluminum, steel, stainless steel, or the like having high thermal conductivity.
The internal space of the housing 23 is sealed by the housing 23 and the bottom plate 24, and air, which is the cooling medium, is introduced into the internal space.

A frame 25 supporting the battery arrays 12, 13, and 14 is installed on the partitioning member 21. The frame 25 has a bar shape and serves to support the battery arrays 12, 13, and 14 that are fixed to the partitioning member 21 to stably position the battery arrays 12, 13, and 14.

The friction of the cooling medium with the passage 15 of the battery arrays 13 and 14 located in the latter part of the flow direction of the cooling medium (e.g., a first end of the cooling medium flow path) is less than the friction of the cooling medium with the passage 15 of the battery array 12 located in the earlier part of the flow direction of the cooling medium (e.g., a second end of the cooling medium flow path). In other words, the battery arrays 13 and 14 provide less resistance to flow of the cooling medium in the cooling medium flow path than the battery array 12.

To achieve this, in one embodiment the number of protrusions 18 arranged between the rechargeable batteries 10 of the battery arrays 13 and 14 located on the latter part of the flow direction of the cooling medium is less than the number of protrusions 18 located between the rechargeable batteries 10 of the battery array 12 located in the earlier part of the flow direction of the cooling medium.

The protrusions 18 are spaced from each other. In one embodiment, eight protrusions 18 are installed in the rechargeable battery 10 of the battery array 12 located in the earliest part (initial part) of the flow direction of the cooling medium, six protrusions 18 are installed in the rechargeable battery 10 of the battery array 13 located in the center, and four protrusions are in the rechargeable battery 10 of the battery array 14 located in the latter part of the flow direction of the cooling medium. Herein, the protrusions 18 installed in the rechargeable battery 10 of the battery array 14 located in the earliest part are arranged to cross each other (i.e., they are not aligned with an adjacent protrusion with respect to the flow direction of the cooling medium) to thereby further increase the friction between the cooling medium and the dot protrusion 18.

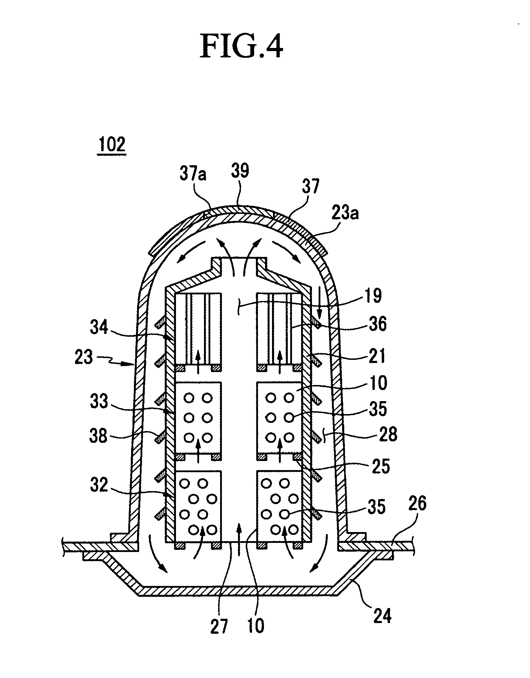

In one embodiment, the cooling medium is formed by air and moves substantially in parallel to a direction in which the battery arrays 12, 13, 14 are spaced form each other, as shown for example in FIGs. 1 and 4. Therefore, the battery arrays 13 and 14 located in the latter part of the flow direction of the cooling medium are located higher than the battery array 12 located in the earlier part of the flow direction of the cooling medium when the battery module is oriented upright in an operating orientation, as shown in FIG. 1.

Air heated by the rechargeable batteries 10 is moved upwards by buoyancy in the cooling space 27 and as the air moves upwards, the air is heated to thereby increase the moving velocity.

The moving velocity of the cooling medium increases as the cooling medium moves upwards, such that the cooling medium moves to the outside of the partitioning member 21. The cooling medium discharged from the cooling space 27 formed in the partitioning member 21 is cooled by exchanging heat with the housing and air cooled in the upper part moves downwards through the moving space 28. Further, convection in which the air moves from the moving space 28 to the cooling space 27 having lower pressure occurs. The rechargeable batteries 10 are cooled through convection by the cooling medium.

In one embodiment, since comparatively many protrusions 18 are formed in the lower part, the cooling medium slowly moves upwards. However, the number of protrusions 18 decreases towards the top so that the moving velocity of the cooling medium is increased. The temperature of the cooling medium increases due to the rechargeable batteries 10 and causes the cooling medium to move upwards. The moving velocity of the cooling medium increases as it moves upwards due to the arrangement of the protrusions 18. As a result, the cooling medium which moves upward pushes out the cooling medium which is located higher than the above-mentioned cooling medium to circulate the cooling medium through the housing 23.

The moving velocity of the cooling medium helps convection. Therefore, as the moving velocity of the cooling medium increases, cooling by convection may increase. According to the exemplary embodiment, since the flow resistance of the passage of the cooling medium of the battery arrays 13 and 14 located in the latter part of the moving direction of the cooling medium is less, the moving velocity of the cooling medium increases as the cooling medium moves upwards. As a result, cooling efficiency is improved.

Further, the cooling medium flowing upwards and the cooling medium flowing downwards are separated from each other by the partitioning member 21. Therefore, since convection may more easily occur and the cooling medium is cooled by the housing 23 and the bottom plate 24, the cooling medium flows upwards through the battery arrays and transfers heat to the housing 23 while flowing downwards and circulates.

As such, according to the exemplary embodiment, since the rechargeable batteries 10 are cooled by the convection and the cooling medium is recycled, it is possible to prevent external foreign materials from being introduced.

FIG. 4 is a cross-sectional view of a battery module according to a second exemplary embodiment of the present invention.

Referring to FIG. 4, the battery module 102 according to the exemplary embodiment has substantially the same structure as the battery module according to the first exemplary embodiment except for the structure of the protrusions 35 and 36 and the addition of cooling member 37 and the guide members 38. Therefore, the same structure will not be described again.

The battery module 102 according to the exemplary embodiment includes a plurality of battery arrays 32, 33, and 34 and a housing 23, and protrusions 35 and 36 located between the rechargeable batteries 10 of the battery arrays 32, 33, and 34.

The protrusions include a dot protrusion 35 and a guide protrusion 36. Herein, the dot protrusions 35 have a circular or polygonal cross and are spaced from each other in the flow direction of the cooling medium on the surface of one rechargeable battery. The guide protrusions 36 are substantially rectangular protrusions extending in the flow direction of the cooling medium.

The number of guide protrusions 36 located between the rechargeable batteries 10 of the battery array 34 located in the latter part of the flow direction of the cooling medium is smaller than the number of dot protrusions 35 located between the rechargeable batteries 10 of the battery array 32 and 33 located in the earlier part of the flow direction of the cooling medium.

A plurality of dot protrusions 35 are spaced from each other in the flow direction of the cooling medium in one rechargeable battery 10. Eight protrusions 35 are installed in the rechargeable battery 10 of the battery array 32 located in the earliest part of the flow direction of the cooling medium and six protrusions 35 are installed in the rechargeable battery 10 of the battery array 33 disposed at the center.

In one embodiment, the length of the guide protrusion 36 located between the rechargeable batteries 10 of the battery array 34 in the latter part of the flow direction of the cooling medium is greater than the length of the dot protrusions 35 located between the rechargeable batteries of the battery array 34 located in the earlier part of the flow direction of the cooling medium. Further, the width of the guide protrusion 36 in the latter part of the flow direction of the cooling medium is smaller than the width of the dot protrusions 35 located in the earlier part of the flow direction of the cooling medium.

That is, the plurality of guide protrusions 36 extending in the flow direction of the cooling medium are spaced from each other to allow a cooling medium to flow therebetween in the flow direction.

The guide protrusion 36 has a bar shape extending in the flow direction of the cooling medium and extends from one end to the other end of the rechargeable battery 10.

The guide protrusion 36 reduces a cross section of the cooling medium passage or flow path without interrupting the flow of the cooling medium. As a result, the velocity of the cooling medium is further increased. In other words, the protrusions 35 having a large width and a short length interrupts the progression of the cooling medium and distributes the cooling medium, but the guide protrusion 36 serves to reduce only the cross section of the cooling medium passage and allows the cooling medium to progress more rapidly.

As such, according to the exemplary embodiment, since the velocity of the cooling medium further increases toward the latter part with respect to the flow direction of the cooling medium, the convection in the housing may more actively occur.

The guide member 38 protrudes obliquely in the flow direction of the cooling medium and is installed on an outer surface of the partitioning member 21. The guide member 38 has a plate shape formed obliquely in the flow direction of the cooling medium and serves to prevent the cooling medium from flowing backward in the moving space 28.

Further, the cooling member 37 is installed on the top 23a of the housing 23. The cooling member 37 serves to cool the housing 23 by receiving heat from the housing 23. The cooling member 37 may have various structures and may be made of a thermoelectric element, a metal plate transferring heat to other members, or the like.

A hole (e.g., opening) 37a is formed at the center the cooling member 37 and a heat insulating member 39 is inserted into the hole 37a to be in contact with the housing 23. As a result, the center portion of the housing 23 is not cooled as much and only the edge portion of the housing 23 is cooled. As a result, the heated cooling medium may move upwards at high speed towards the center portion of the housing 23 and the cooling medium which moves upwards is cooled while moving to the edge of the housing 23. The cooling medium which is cooled at the edge of the housing 23 moves downwards in the moving space 28 to cause the convection to more actively occur. As a result, cooling efficiency is improved.

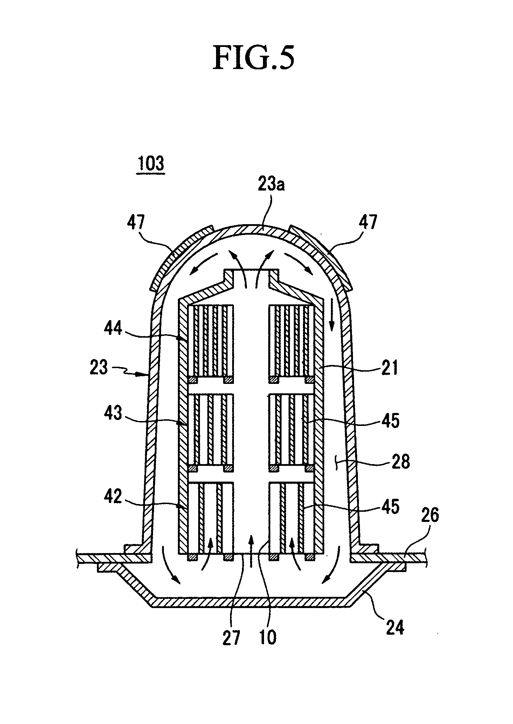

FIG. 5 is a cross-sectional view of a battery module according to a third exemplary embodiment of the present invention.

Referring to FIG. 5, the battery module 103 according to the exemplary embodiment has substantially the same structure as the battery module according to the first exemplary embodiment except for the structure of a guide protrusion 45 and the addition of a cooling member 47. Therefore, the same structure will not be described again.

The battery module 103 according to the exemplary embodiment includes a plurality of battery arrays 42, 43, and 44 and a housing 23, and guide protrusions 45 located between rechargeable batteries 10 of the battery arrays 42, 43, and 44.

The plurality of guide protrusions 45 that extend in a flow direction of a cooling medium are spaced from each other between the rechargeable batteries 10 to allow a cooling medium to flow along a length of the protrusions. Each guide protrusion 45 has a bar shape that extends in the flow direction of the cooling medium and extends from one end to the other end of the rechargeable battery 10.

The number of guide protrusions 45 of the rechargeable batteries of the battery array 44 located in the most latter part of the flow direction of the cooling medium is larger than the number of guide protrusions 45 located between the rechargeable batteries 10 of the battery array 42 and 43 located in the earlier part of the flow direction of the cooling medium.

The guide protrusion 45 reduces a cross section of a cooling medium passage without significantly interrupting the flow of the cooling medium. Therefore, when the number of guide protrusions 45 is increased, the width of the cooling medium passage is decreased. As a result, since the cross section of the passage is decreased, the moving velocity of the cooling medium is further increased and as the cross section of the cooling medium passage decreases, the friction between the cooling medium and the cooling medium passage is decreased.

As such, according to the exemplary embodiment, since the velocity of the cooling medium further increases toward the latter part with respect to the flow direction of the cooling medium, the convection in the housing 23 may more actively occur.

Further, the cooling member 47 is installed at the edge of the top 23a of the housing 23. The cooling member 47 serves to cool the housing 23 by receiving heat from the housing 23. The cooling member 47 may be formed in various configurations and may be made of a thermoelectric element, a metal plate transferring heat to other members, or the like. As described in the exemplary embodiment, when the cooling member 47 is installed at the edge of the top 23a of the housing 23, the cooling medium which is heated by the rechargeable battery 10 and thus moves upwards may easily move downwards on a moving passage while moving to the edge. Since the cooling member 47 is omitted from the center portion of the top 23a, the cooling member is not provided on the top 23a of the housing, so that cooling space is open below the center portion of the top and causes the convection to occur more actively, thereby further improving cooling efficiency.

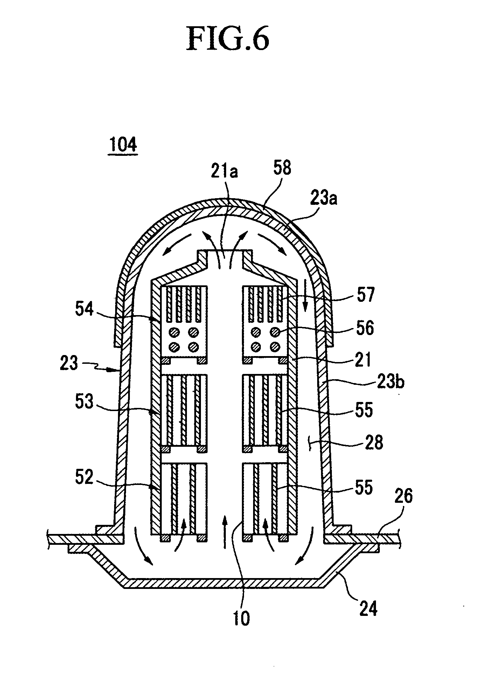

FIG. 6 is a cross-sectional view of a battery module according to a fourth exemplary embodiment of the present invention.

Referring to FIG. 6, the battery module 104 according to the exemplary embodiment has substantially the same structure as the battery module according to the third exemplary embodiment except for the configuration of protrusions 55, 56, and 57 and a cooling member 58. Therefore, the same structure will not be described again.

The battery module 104 according to the exemplary embodiment includes a plurality of battery arrays 52, 53, and 54 and a housing 23, and protrusions 55, 56, and 57 located between rechargeable batteries 10 of the battery arrays 52, 53, and 54.

Three battery arrays 52, 53, and 54 are spaced from each other along a flow direction of a cooling medium. Additionally, a first guide protrusion 55 is installed between the rechargeable batteries 10 of the battery array 52 located in the earliest part of the flow direction of the cooling medium and the battery array 53 located at the center. The first guide protrusion 55 has a bar shape extending in the flow direction of the cooling medium. The first guide protrusion 55 is elongate and extends from one end to the other end of the rechargeable battery 10.

The number of first guide protrusions 55 located between the rechargeable batteries of the battery array 53 located in the latter part of the flow direction of the cooling medium is larger than the number of first guide protrusions 55 located between the rechargeable batteries 10 of the battery array 52 located in the earlier part of the flow direction of the cooling medium.

Further, a second guide protrusion 57 and a dot protrusion 56 are installed between the rechargeable batteries 10 located in the latter part of the battery arrays 52, 53, and 54, i.e. on the batteries located closer to the top 23a of the housing 23. Since the cooling medium in the centre passage moves from the bottom of the housing 23 toward the top 23a, the batteries located closer to the top 23a of the housing 23 are the last with respect to a flow direction of the cooling medium flow path.. The second guide protrusion 57 is installed in the latter part of the protrusion on the basis of the flow direction of the cooling medium. As a result, the cooling medium passing through the dot protrusion 56 is guided by the second guide protrusion 57 to flow.

The second guide protrusion 57 extends in the flow direction of the cooling medium. Therefore, the second guide protrusion 57 extends from one end to about the center portion of the rechargeable battery 10. The dot protrusion 56 is formed in a portion of the battery where the second guide protrusion 57 is absent. As described in the exemplary embodiment, when both the second guide protrusion 57 and the dot protrusion 56 are located on one rechargeable battery 10, the cooling medium and the rechargeable battery 10 may be in contact with each other for enough time to cool the rechargeable battery 10 by the dot protrusion 56 and the cooling medium which is in contact with the rechargeable battery may be rapidly discharged through the second guide protrusion 57. When both the dot protrusion 56 and the second guide protrusion 57 are located on the same battery, cooling may be stably performed.

In one embodiment, the cooling member 58 is attached to an outer surface of the housing 23. Therefore, the cooling member 58 is in contact with the housing 23 while extending from the top 23a of the housing 23 to the side 23b of the housing 23. According to the exemplary embodiment, since the cooling member 58 is in contact with the housing 23 through a sufficient area, the cooling medium which moves to the upper part of the housing 23 may be cooled through the top 23a and is cooled by contacting the side 23b while passing through moving space. As a result, convection may occur more actively.

As such, according to the exemplary embodiment, since the velocity of the cooling medium further increases toward the latter part (i.e., towards the second end) of the cooling medium flow path, the convection in the housing 23 may occur more actively.

Further, the cooling member 58 is installed at the edge of the top 23a of the housing 23. The cooling member 58 serves to cool the housing 23 by receiving heat from the housing 23. The cooling member 58 may have various structures and may be made of a thermoelectric element, a metal plate transferring heat to other members, or the like.

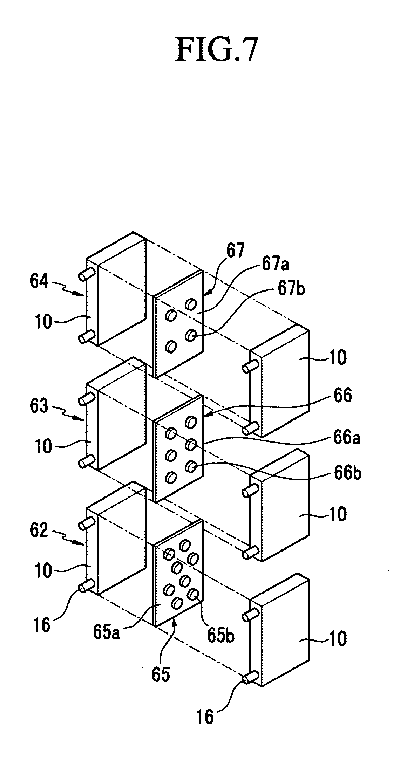

FIG. 7 is an exploded perspective view of rechargeable batteries constituting a battery module according to a fifth exemplary embodiment of the present invention.

Referring to FIG. 7, the battery module according to the exemplary embodiment has substantially the same structure as the battery module according to the first exemplary embodiment except for the configuration of partitions 65, 66, and 67. Therefore, the same structure will not be described again.

The battery module according to the exemplary embodiment includes a plurality of battery arrays 62, 63, and 64, a housing storing the battery arrays 62, 63, and 64, and protrusions 65b, 66b, and 67b located between rechargeable batteries 10.

The protrusions 65b, 66b, and 67b are fixed to plate materials 65a, 66a, and 67a located between the rechargeable batteries 10. Therefore, the protrusions 65b, 66b, and 67b and the plate materials 65a, 66a, and 67a are coupled with each other to form the partitions 65, 66, and 67. The partitions 65, 66, and 67 are located between the rechargeable batteries 10 to form a passage of a cooling medium.

The number of protrusions 67b of the partition 67 located in the latter part of the flow direction of the cooling medium is smaller than the number of protrusions 65b and 66b of the partitions 65 and 66 located in the earlier part of the flow direction of the cooling medium.

According to the exemplary embodiment, since the protrusion 65b, 66b, and 67b are fixed to the partitions 65, 66, and 67, the partitions 65, 66, and 67 are inserted between the rechargeable batteries 10, such that the protrusions 65b, 66b, and 67b may be easily located between the rechargeable batteries 10.

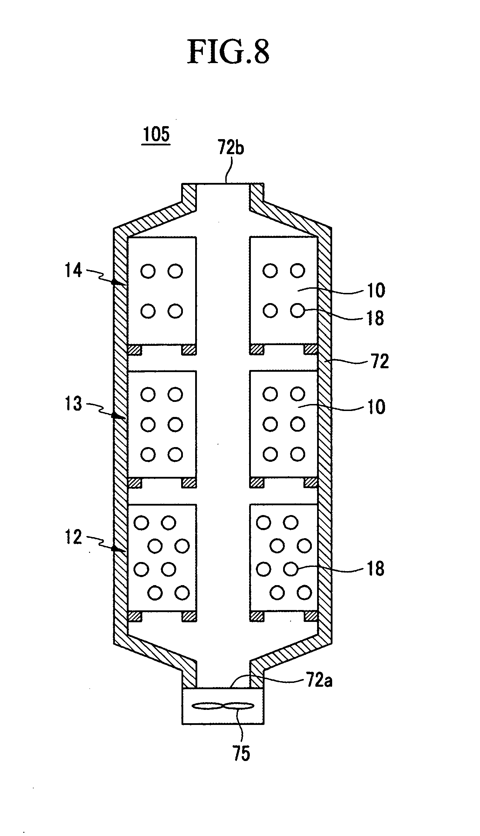

FIG. 8 is a cross-sectional view of a battery module according to a sixth exemplary embodiment of the present invention.

Referring to FIG. 8, the battery module 105 according to the exemplary embodiment has substantially the same structure as the battery module according to the first exemplary embodiment except for the configuration of a housing 72 and a blower 75. Therefore, the same structure will not be described again.

The battery module 105 according to the exemplary embodiment includes a plurality of battery arrays 12, 13, and 14 and a housing 72, and protrusions 18 located between rechargeable batteries 10 of the battery arrays 12, 13, and 14.

The housing 72 has a generally hexahedral body. An inlet 72a through which a cooling medium is introduced is formed at one end of the housing 72 and an outlet 72b through which the cooling medium is discharged is formed at the other end of the housing 72. The blower 75 compulsorily introducing the cooling medium into the housing 72 is installed in the inlet 72a. The cooling medium is formed by air and the blower 75 may be formed by a fan compulsorily transferring air.

Meanwhile, like the first exemplary embodiment, the number of protrusions 18 located between the rechargeable batteries 10 of the battery array 14 located in the latter part of the flow direction of the cooling medium is smaller than the number of protrusions 18 located between the rechargeable batteries 10 of the battery array 12 and 13 located in the earlier part of the flow direction of the cooling medium.

As a result, the friction between the battery arrays 12 and 13 located in the earlier part of the flow direction of the cooling medium and the cooling medium is larger than the friction between the battery array 14 located in the latter part of the flow direction of the cooling medium and the cooling medium.

According to the exemplary embodiment, since the velocity of the cooling medium increases to the latter part of the flow direction the cooling medium is supplied by the blower 75, the cooling medium may be rapidly moved even with small power. As a result, the cooling efficiency of the battery module 105 is improved and the loss of electric power by the blower 75 can be minimized.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

### Description of Symbols

- 10:: Rechargeable battery
- 12, 13, 14, 32, 33, 34, 42, 43, 44, 52,: Battery array
- 17:: Case
- 19:: Center passage

- 101, 102, 103, 104, 105:: Battery module
- 18, 35, 56, 65b, 66b, 67b:: Protrusion
- 21:: Partitioning member

- 23, 72:: Housing
- 23b:: Side
- 25:: Frame
- 28:: Moving space
- 37, 47, 58:: Cooling member
- 55:: First guide protrusion
- 65, 66, 67:: Partition
- 72a:: Inlet
- 75:: Blower

- 23a:: Top
- 24:: Bottom plate
- 27:: Cooling space
- 36:: Guide protrusion
- 38:: Guide member
- 57:: Second guide protrusion
- 65a, 66a, 67a:: Plate material
- 72b:: Outlet

## Claims

1. A battery module (101, 102, 103, 104, 105) comprising:
a plurality of batteries (10) stacked together along a first direction to form a plurality of battery arrays (12, 13, 14, 32, 33, 34, 42, 43, 44, 52, 53, 54, 62, 63, 64), wherein a first group of the battery arrays (12, 13, 14, 32, 33, 34, 42, 43, 44, 52, 53, 54, 62, 63, 64) are aligned together along a second direction perpendicular to the first direction and a second group of the battery arrays (12, 13, 14, 32, 33, 34, 42, 43, 44, 52, 53, 54, 62, 63, 64) are aligned together along the second direction, and wherein the first group and the second group are spaced from each other to create a cooling medium flow path (19) therebetween, the cooling medium flow path (19) having a first end and a second end, wherein a cooling medium has a flow direction parallel to the second direction and going from the first end toward the second end;
a housing (23) accommodating the batteries (10); and
a plurality of protrusions (18, 35, 36, 45, 55, 56, 57, 65b, 66b, 67b) on each of the batteries (10) for spacing the batteries (10) from each other along the first direction, wherein a number of protrusions (18, 35, 36, 45, 55, 56, 57, 65b, 66b, 67b) on a first battery of the batteries (10) is different from a number of protrusions (18, 35, 36, 45, 55, 56, 57, 65b, 66b, 67b) on a second battery adjacent to the first battery with respect to a flow direction of the cooling medium flow path (19).

2. The battery module of claim 1, wherein the first battery is located closer to the first end of the cooling medium flow path (19) than the second battery, and
wherein the protrusions (18, 35, 65b, 66b, 67b) have a dot shape and the number of protrusions (18, 35, 65b) on the first battery is greater than the number of protrusions (18, 35, 66b) on the second battery, or
wherein the protrusions (45, 55) have an elongate shape and the number of protrusions (45, 55) on the first battery is smaller than the number of protrusions (45, 55) on the second battery.

3. The battery module of one of the preceding claims, wherein the protrusions (18, 35, 36, 45, 55, 56, 57, 65b, 66b, 67b) are spaced from each other on an outer surface of each of the batteries (10).

4. The battery module of claim 2, wherein a width of a first protrusion (35) of the protrusions located on the first battery is greater than a width of a second protrusion (36) of the protrusions located on the second battery, and/or
wherein a length of a first protrusion of the protrusions (35) located on the first battery is less than a length of a second protrusion (36) of the protrusions located on the second battery.

5. The battery module of one of the preceding claims, wherein the protrusions (18, 35, 36, 45, 55, 56, 57, 65b, 66b, 67b) comprise guide protrusions (36, 45, 55, 57) that are elongate and extend in a direction from the first end to the second end of the cooling medium flow path (19).

6. The battery module of one of the preceding claims, wherein the housing (23) is sealed, so that the cooling medium for cooling the battery by convection can be recycled.

7. The battery module of claim 6, wherein the first group of battery arrays (12, 13, 14, 32, 33, 34, 42, 43, 44, 52, 53, 54) extends along a first side of the cooling medium flow path (19) and the second group of battery arrays (12, 13, 14, 32, 33, 34, 42, 43, 44, 52, 53, 54) extends along a second side of the cooling medium flow path (19) parallel to the first group.

8. The battery module of claim 6, further comprising a partitioning member (21), wherein the first group and the second group of battery arrays (12, 13, 14, 32, 33, 34, 42, 43, 44, 52, 53, 54) are located within the partitioning member (21), wherein a cooling space (27) is defined within the partitioning member (21) and a moving space (28) is defined outside of the partitioning member (21), and wherein the partitioning member is configured so that a cooling medium can move between the cooling space (27) and the moving space (28).

9. The battery module of claim 8, wherein the partitioning member (21) comprises a thermal insulating material.

10. The battery module of one of claims 8 and 9, further comprising a guide member (38) formed on the partitioning member (21), wherein the guide member (38) extends obliquely from the partitioning member (21) into the moving space (28).

11. The battery module of one of the preceding claims, wherein the housing (23) further comprises:
a bottom plate (24) configured to be exposed to exterior air, and/or
a cooling member (37, 47, 58) connected to the housing (23).

12. The battery module of claim 11, wherein the cooling member (37, 47, 58) is located at one end of the housing (23) or at an edge of the housing (23).

13. The battery module of claim 12, wherein the cooling member (37) has an opening (37a) and wherein a heat insulating member (39) is in the opening (37a) and contacts the housing (23).

14. The battery module of one of the preceding claims,
wherein the protrusions (18, 35, 36, 45, 55, 56, 57) are fixed to a case of the battery (10) or
wherein the protrusions (65b, 66b, 67b) are fixed to a plate (65a, 66a, 67a) located between the batteries (10).

15. The battery module of claim 1, wherein the protrusions (35, 36, 55, 56, 57) comprise guide protrusions (36, 55, 57) that are elongate and extend in a flow direction of the cooling medium flow path (19) and dot protrusions (35, 56) having a greater width and a shorter length than the guide protrusions (36, 55, 57), and wherein the dot protrusions (35, 56) are closer to a first end of the flow path channel than the guide protrusions (36, 55, 57).

## Patentansprüche

1. Batteriemodul (101, 102, 103, 104, 105), aufweisend:
eine Vielzahl von Batterien (10), die entlang einer ersten Richtung gestapelt sind, so dass sie eine Vielzahl von Batterie-Anordnungen (12, 13, 14, 32, 33, 34, 42, 43, 44, 52, 53, 54, 62, 63, 64) ausbilden, wobei eine erste Gruppe von Batterieanordnungen (12, 13, 14, 32, 33, 34, 42, 43, 44, 52, 53, 54, 62, 63, 64) entlang einer zweiten Richtung, die senkrecht zur ersten Richtung verläuft, miteinander fluchten, und eine zweite Gruppe von Batterieanordnungen (12, 13, 14, 32, 33, 34, 42, 43, 44, 52, 53, 54, 62, 63, 64) entlang der zweiten Richtung miteinander fluchten, und wobei die erste Gruppe und die zweite Gruppe voneinander beabstandet sind, so dass sie einen Strömungsweg (19) für Kühlmittel zwischen sich schaffen, wobei der Strömungsweg (19) für Kühlmittel ein erstes Ende und ein zweites Ende aufweist, wobei ein Kühlmittel eine Strömungsrichtung aufweist, die parallel zur zweiten Richtung verläuft und vom ersten Ende zum zweiten Ende führt;
ein Gehäuse (23), das die Batterien (10) aufnimmt; und
eine Vielzahl von Vorsprüngen (18, 35, 36, 45, 55, 56, 57, 65b, 66b, 67b) auf jeder der Batterien (10) zum Voneinander-Beabstanden der Batterien (10) entlang der ersten Richtung, wobei sich eine Anzahl von Vorsprüngen (18, 35, 36, 45, 55, 56, 57, 65b, 66b, 67b) auf einer ersten Batterie der Batterien (10) von einer Anzahl von Vorsprüngen (18, 35, 36, 45, 55, 56, 57, 65b, 66b, 67b) auf einer zweiten Batterie, die bezüglich einer Strömungsrichtung des Strömungsweges (19) für Kühlmittel benachbart zur ersten Batterie ist, unterscheidet.

2. Batteriemodul nach Anspruch 1, wobei die erste Batterie näher am ersten Ende des Strömungsweges (19) für Kühlmittel angeordnet ist als die zweite Batterie, und
wobei die Vorsprünge (18, 35, 65b, 66b, 67b) eine Punktform aufweisen und die Anzahl der Vorsprünge (18, 35, 65b) auf der ersten Batterie größer ist als die Anzahl der Vorsprünge (18, 35, 66b) auf der zweiten Batterie, oder
wobei die Vorsprünge (45, 55) eine längliche Form aufweisen und die Anzahl der Vorsprünge (45, 55) auf der ersten Batterie kleiner als die Anzahl der Vorsprünge (45, 55) auf der zweiten Batterie ist.

3. Batteriemodul nach einem der vorhergehenden Ansprüche, wobei die Vorsprünge (18, 35, 36, 45, 55, 56, 57, 65b, 66b, 67b) auf einer Außenfläche jeder der Batterien (10) voneinander beabstandet sind.

4. Batteriemodul nach Anspruch 2, wobei eine Breite eines ersten Vorsprungs (35) der auf der ersten Batterie angeordneten Vorsprünge größer ist als eine Breite eines zweiten Vorsprungs (36) der auf der zweiten Batterie angeordneten Vorsprünge, und/oder
wobei eine Länge eines ersten Vorsprungs der auf der ersten Batterie angeordneten Vorsprünge (35) kleiner ist als eine Länge eines zweiten Vorsprungs (36) der auf der zweiten Batterie angeordneten Vorsprünge.

5. Batteriemodul nach einem der vorhergehenden Ansprüche, wobei die Vorsprünge (18, 35, 36, 45, 55, 56, 57, 65b, 66b, 67b) Führungsvorsprünge (36, 45, 55, 57) aufweisen, die länglich sind und sich in eine Richtung vom ersten Ende zum zweiten Ende des Strömungsweges (19) für Kühlmittel erstrecken.

6. Batteriemodul nach einem der vorhergehenden Ansprüche, wobei das Gehäuse (23) versiegelt ist, so dass das Kühlmittel zur Konvektionskühlung der Batterie wiederaufbereitet werden kann.

7. Batteriemodul nach Anspruch 6, wobei sich die erste Gruppe der Batterieanordnungen (12, 13, 14, 32, 33, 34, 42, 43, 44, 52, 53, 54) entlang einer ersten Seite des Strömungsweges (19) für Kühlmittel erstreckt und sich die zweite Gruppe der Batterieanordnungen (12, 13, 14, 32, 33, 34, 42, 43, 44, 52, 53, 54) entlang einer zweiten Seite des Strömungsweges (19) für Kühlmittel parallel zur ersten Gruppe erstreckt.

8. Batteriemodul nach Anspruch 6, weiterhin aufweisend ein Trennelement (21), wobei die erste Gruppe und die zweite Gruppe der Batterieanordnungen (12, 13, 14, 32, 33, 34, 42, 43, 44, 52, 53, 54) im Trennelement (21) angeordnet sind, wobei ein Kühlraum (27) im Trennelement (21) definiert ist und ein Bewegungsraum (28) außerhalb des Trennelements (21) definiert ist, und wobei das Trennelement derart konfiguriert ist, dass sich ein Kühlmittel zwischen dem Kühlraum (27) und dem Bewegungsraum (28) bewegen kann.

9. Batteriemodul nach Anspruch 8, wobei das Trennelement (21) ein Wärmedämmmaterial aufweist.

10. Batteriemodul nach Anspruch 8 und 9, weiterhin aufweisend ein Führungselement (38), das auf dem Trennelement (21) ausgebildet ist, wobei sich das Führungselement (38) schräg vom Trennelement (21) in den Bewegungsraum (28) erstreckt.

11. Batteriemodul nach einem der vorhergehenden Ansprüche, wobei das Gehäuse (23) weiterhin aufweist:
eine untere Platte (24), die derart konfiguriert ist, dass sie nach außen freiliegt, und/oder
ein Kühlelement (37, 47, 58), das mit dem Gehäuse (23) verbunden ist.

12. Batteriemodul nach Anspruch 11, wobei das Kühlelement (37, 47, 58) an einem Ende des Gehäuses (23) oder an einem Rand des Gehäuses (23) angeordnet ist.

13. Batteriemodul nach Anspruch 12, wobei das Kühlelement (37) eine Öffnung (37a) aufweist und wobei sich ein Wärmedämmelement (39) in der Öffnung (37a) befindet und mit dem Gehäuse (23) in Kontakt steht.

14. Batteriemodul nach einem der vorhergehenden Ansprüche,
wobei die Vorsprünge (18, 35, 36, 45, 55, 56, 57) an einem Gehäuse der Batterie (10) befestigt sind oder
wobei die Vorsprünge (65b, 66b, 67b) an einer Platte (65a, 66a, 67a) befestigt sind, die zwischen den Batterien (10) angeordnet ist.

15. Batteriemodul nach Anspruch 1, wobei die Vorsprünge (35, 36, 55, 56, 57) Führungsvorsprünge (36, 55, 57), die länglich sind und sich in eine Strömungsrichtung des Strömungsweges (19) für Kühlmittel erstrecken, und Punkt-Vorsprünge (35, 56) aufweisen, die eine größere Breite und eine kleinere Länge als die Führungsvorsprünge (36, 55, 57) aufweisen, und wobei sich die Punkt-Vorsprünge (35, 56) näher an einem ersten Ende des Strömungswegkanals als die Führungsvorsprünge (36, 55, 57) befinden.

## Revendications

1. Module de batterie (101, 102, 103, 104, 105) comprenant :
une pluralité de batteries (10) empilées les unes sur les autres le long d'une première direction pour former une pluralité de réseaux de batteries (12, 13, 14, 32, 33, 34, 42, 43, 44, 52, 53, 54, 62, 63, 64), des réseaux de batteries (12, 13, 14, 32, 33, 34, 42, 43, 44, 52, 53, 54, 62, 63, 64) d'un premier groupe étant alignés ensemble le long d'une deuxième direction perpendiculaire à la première direction et des réseaux de batteries (12, 13, 14, 32, 33, 34, 42, 43, 44, 52, 53, 54, 62, 63, 64) d'un deuxième groupe étant alignés ensemble le long de la deuxième direction, et le premier groupe et le deuxième groupe étant espacés l'un de l'autre pour créer une voie d'écoulement (19) d'agent de refroidissement entre eux, la voie d'écoulement (19) d'agent de refroidissement ayant une première extrémité et une deuxième extrémité, un agent de refroidissement présentant une direction d'écoulement parallèle à la deuxième direction et allant de la première extrémité vers la deuxième extrémité ;
un logement (23) recevant les batteries (10) ; et
une pluralité de saillies (18, 35, 36, 45, 55, 56, 57, 65b, 66b, 67b) sur chacune des batteries (10) pour espacer les batteries (10) les unes des autres le long de la première direction, un certain nombre de saillies (18, 35, 36, 45, 55, 56, 57, 65b, 66b, 67b) sur une première batterie des batteries (10) étant différent d'un certain nombre de saillies (18, 35, 36, 45, 55, 56, 57, 65b, 66b, 67b) sur une deuxième batterie adjacente à la première batterie par rapport à une direction d'écoulement de la voie d'écoulement (19) d'agent de refroidissement.

2. Module de batterie de la revendication 1, dans lequel la première batterie est située plus proche de la première extrémité de la voie d'écoulement (19) d'agent de refroidissement que la deuxième batterie, et
dans lequel les saillies (18, 35, 65b, 66b, 67b) ont une forme de point et le nombre de saillies (18, 35, 65b) sur la première batterie est supérieur au nombre de saillies (18, 35, 66b) sur la deuxième batterie, ou
dans lequel les saillies (45, 55) ont une forme allongée et le nombre de saillies (45, 55) sur la première batterie est inférieur au nombre de saillies (45, 55) sur la deuxième batterie.

3. Module de batterie de l'une des revendications précédentes, dans lequel les saillies (18, 35, 36, 45, 55, 56, 57, 65b, 66b, 67b) sont espacées les unes des autres sur une surface extérieure de chacune des batteries (10).

4. Module de batterie de la revendication 2, dans lequel une largeur d'une première saillie (35) des saillies situées sur la première batterie est supérieure à une largeur d'une deuxième saillie (36) des saillies situées sur la deuxième batterie, et/ou
dans lequel une longueur d'une première saillie des saillies (35) situées sur la première batterie est inférieure à une longueur d'une deuxième saillie (36) des saillies situées sur la deuxième batterie.

5. Module de batterie de l'une des revendications précédentes, dans lequel les saillies (18, 35, 36, 45, 55, 56, 57, 65b, 66b, 67b) comprennent des saillies de guidage (36, 45, 55, 57) qui sont allongées et qui s'étendent dans une direction allant de la première extrémité à la deuxième extrémité de la voie d'écoulement (19) d'agent de refroidissement.

6. Module de batterie de l'une des revendications précédentes, dans lequel le logement (23) est scellé, de sorte que l'agent de refroidissement qui permet de refroidir la batterie par convection puisse être recyclé.

7. Module de batterie de la revendication 6, dans lequel le premier groupe de réseaux de batteries (12, 13, 14, 32, 33, 34, 42, 43, 44, 52, 53, 54) s'étend le long d'un premier côté de la voie d'écoulement (19) d'agent de refroidissement et le deuxième groupe de réseaux de batteries (12, 13, 14, 32, 33, 34, 42, 43, 44, 52, 53, 54) s'étend le long d'un deuxième côté de la voie d'écoulement (19) d'agent de refroidissement en étant parallèle au premier groupe.

8. Module de batterie de la revendication 6, comprenant en outre un élément de séparation (21), le premier groupe et le deuxième groupe de réseaux de batteries (12, 13, 14, 32, 33, 34, 42, 43, 44, 52, 53, 54) étant situés à l'intérieur de l'élément de séparation (21), un espace de refroidissement (27) étant défini à l'intérieur de l'élément de séparation (21) et un espace de déplacement (28) étant défini à l'extérieur de l'élément de séparation (21), et l'élément de séparation étant configuré de sorte qu'un agent de refroidissement puisse se déplacer entre l'espace de refroidissement (27) et l'espace de déplacement (28).

9. Module de batterie de la revendication 8, dans lequel l'élément de séparation (21) comprend un isolant thermique.

10. Module de batterie de l'une des revendications 8 et 9, comprenant en outre un élément de guidage (38) formé sur l'élément de séparation (21), l'élément de guidage (38) s'étendant obliquement à partir de l'élément de séparation (21) dans l'espace de déplacement (28).

11. Module de batterie de l'une des revendications précédentes, dans lequel le logement (23) comprend en outre :
une plaque inférieure (24) configurée pour être exposée à l'air extérieur, et/ou
un élément de refroidissement (37, 47, 58) relié au logement (23).

12. Module de batterie de la revendication 11, dans lequel l'élément de refroidissement (37, 47, 58) est situé au niveau d'une extrémité du logement (23) ou au niveau d'un bord du logement (23).

13. Module de batterie de la revendication 12, dans lequel l'élément de refroidissement (37) a une ouverture (37a) et dans lequel un élément d'isolation thermique (39) se trouve dans l'ouverture (37a) et entre en contact avec le logement (23).

14. Module de batterie de l'une des revendications précédentes,
dans lequel les saillies (18, 35, 36, 45, 55, 56, 57) sont fixées à un boîtier de la batterie (10) ou
dans lequel les saillies (65b, 66b, 67b) sont fixées à une plaque (65a, 66a, 67a) située entre les batteries (10).

15. Module de batterie de la revendication 1, dans lequel les saillies (35, 36, 55, 56, 57) comprennent des saillies de guidage (36, 55, 57) qui sont allongées et qui s'étendent dans une direction d'écoulement de la voie d'écoulement (19) d'agent de refroidissement, et des saillies en forme de point (35, 56) ayant une largeur plus grande et une longueur plus courte que celles des saillies de guidage (36, 55, 57), et dans lequel les saillies en forme de point (35, 56) sont plus proches d'une première extrémité du canal d'écoulement que les saillies de guidage (36, 55, 57).
